# EUROPÄISCHE PATENTSCHRIFT

(11) **EP 3 535 063 B1**
(45) Veröffentlichungstag und Bekanntmachung des Hinweises auf die Patenterteilung: **13.05.2020**
(21) Anmeldenummer: 17808446.3
(22) Anmeldetag: 01.12.2017
(51) Int. Cl.: B05B 1/30, B05B 1/14, B05B 13/04

(54) **DRUCKKOPF ZUR APPLIKATION EINES BESCHICHTUNGSMITTELS AUF EIN BAUTEIL**
PRINTING HEAD FOR APPLYING A COATING MATERIAL ONTO A WORKPIECE
TETE D'IMPRESSION POUR APPLIQUER UN PRODUIT DE REVÊTEMENT SUR UNE PIECE

(30) Priorität: 14.12.2016 DE 102016014946
(43) Veröffentlichungstag der Anmeldung: 11.09.2019
(73) Patentinhaber: Dürr Systems AG, 74321 Bietigheim-Bissingen (DE)
(72) Erfinder: FRITZ, Hans-Georg, 73760 Ostfildern (DE); WÖHR, Benjamin, 74363 Eibensbach (DE); KLEINER, Marcus, 74354 Besigheim (DE); BUBEK, Moritz, 71640 Ludwigsburg (DE); BEYL, Timo, 74354 Besigheim (DE); HERRE, Frank, 71739 Oberriexingen (DE); SOTZNY, Steffen, 71720 Oberstenfeld (DE)
(74) Vertreter: v. Bezold & Partner Patentanwälte - PartG mbB
(86) Internationale Anmeldenummer: PCT/EP2017/081101
(87) Internationale Veröffentlichungsnummer: WO 2018/108564

(56) Entgegenhaltungen:
- EP-A2- 2 644 392
- WO-A1-2015/186014
- DE-A1-102009 029 946
- JP-A- 2004 142 382

## Beschreibung

Die Erfindung betrifft einen Druckkopf zur Applikation eines Beschichtungsmittels auf ein Bauteil, insbesondere zur Applikation eines Lacks auf ein Kraftfahrzeugkarosseriebauteil.

Zur Serienlackierung von Kraftfahrzeugkarosseriebauteilen werden als Applikationsgerät üblicherweise Rotationszerstäuber eingesetzt, die jedoch den Nachteil eines beschränkten Auftragswirkungsgrades haben, d.h. nur ein Teil des applizierten Lacks lagert sich auf den zu beschichtenden Bauteilen ab, während der Rest des applizierten Lacks als sogenannter Overspray entsorgt werden muss.

Eine neuere Entwicklungslinie sieht dagegen als Applikationsgerät sogenannte Druckköpfe vor, wie sie beispielsweise aus DE 10 2013 002 412 A1, US 9,108,424 B2 und DE 10 2010 019 612 A1 bekannt sind. Derartige Druckköpfe geben im Gegensatz zu den bekannten Rotationszerstäubern keinen Sprühnebel des zu applizierenden Lacks ab, sondern einen räumlich eng begrenzten Lackstrahl, der sich nahezu vollständig auf dem zu lackierenden Bauteil niederschlägt, so dass nahezu kein Overspray entsteht.

Bei den bekannten Druckköpfen wird das zu applizierende Beschichtungsmittel (z.B. Lack) durch eine Düse ausgestoßen, wobei die Düse von einer verschiebbaren Ventilnadel geschlossen bzw. geöffnet werden kann. Der mechanische Antrieb der Ventilnadel kann hierbei durch einen Magnetaktor erfolgen, der die Ventilnadel verschiebt und dadurch die Düse entweder verschließt oder freigibt.

Nachteilig an diesen bekannten Druckköpfen ist die Tatsache, dass der Ventilantrieb einschließlich der Ventilnadel dem zu applizierenden Beschichtungsmittel ausgesetzt ist. Zum einen kann dies zu Beschichtungsmittelablagerungen an dem Ventilantrieb führen, wodurch im schlimmsten Fall Funktionsstörungen entstehen können. Zum anderen ist dies aber auch bei einem Farbwechsel problematisch, wenn nacheinander verschiedenartige Beschichtungsmittel appliziert werden sollen, da die herkömmliche Konstruktion die Spülung des Druckkopfs erschwert.

Zum technischen Hintergrund der Erfindung ist auch hinzuweisen auf DE 10 2014 012 705 A1 und DE 10 2007 037 663 A1.

Ferner umfasst der allgemeine technische Hintergrund der Erfindung auch WO 2015/186014 A1, DE 10 2009 029 946 A1 und EP 2 644 392 A2.

Schließlich offenbart JP 2004 142382 A einen Druckkopf gemäß dem Oberbegriff von Anspruch 1. Dieser bekannte Druckkopf ist jedoch noch nicht vollständig befriedigend.

Der Erfindung liegt deshalb die Aufgabe zugrunde, einen entsprechend verbesserten Druckkopf zu schaffen.

Diese Aufgabe wird durch einen erfindungsgemäßen Druckkopf gemäß dem Hauptanspruch gelöst.

Der erfindungsgemäße Druckkopf dient zur Applikation eines Beschichtungsmittels (z.B. Lack, Klebstoff, Primer, Dichtmittel, etc.) auf ein Bauteil. Vorzugsweise ist der Druckkopf so ausgebildet, dass er einen Lack auf ein Kraftfahrzeugkarosseriebauteil applizieren kann. Der im Rahmen der Erfindung verwendete Begriff eines Druckkopfs ist allgemein zu verstehen und dient im Wesentlichen nur zur Abgrenzung gegenüber herkömmlichen Zerstäubern, die keinen räumlich scharf abgegrenzten Beschichtungsmittelstrahl abgeben, sondern einen Sprühnebel des Beschichtungsmittels. Derartige Druckköpfe sind an sich auch bereits aus dem Stand der Technik bekannt und müssen deshalb nicht weiter beschrieben werden. Lediglich beispielhaft wird jedoch auf die bereits vorstehend zitierten Druckschriften US 9,108,424 B2, DE 10 2010 019 612 A1 und DE 10 2013 002 412 A1 hingewiesen, die derartige Druckköpfe prinzipiell beschreiben.

Der erfindungsgemäße Druckkopf weist mindestens eine Auslassöffnung auf, um das Beschichtungsmittel auszugeben. In einem bevorzugten Ausführungsbeispiel der Erfindung handelt es sich bei dieser Auslassöffnung um die Düsenöffnung des Druckkopfs, durch die ein Beschichtungsmittelstrahl des Beschichtungsmittels abgegeben wird. Es besteht jedoch im Rahmen der Erfindung auch die Möglichkeit, dass es sich bei der Auslassöffnung um eine andere Auslassöffnung stromaufwärts vor der eigentlichen Düsenöffnung handelt.

Darüber hinaus weist der erfindungsgemäße Druckkopf in Übereinstimmung mit dem Stand der Technik eine Beschichtungsmittelzuführung auf, um das zu applizierende Beschichtungsmittel der Auslassöffnung zuzuführen.

Ferner enthält der erfindungsgemäße Druckkopf in Übereinstimmung mit dem Stand der Technik ein bewegliches Ventilelement (z.B. Ventilnadel), das zwischen einer Öffnungsstellung und einer Schließstellung beweglich ist, wobei das Ventilelement in der Schließstellung die Auslassöffnung verschließt, wohingegen das bewegliche Ventilelement in der Öffnungsstellung die Auslassöffnung freigibt.

Weiterhin umfasst der erfindungsgemäße Druckkopf in Übereinstimmung mit dem Stand der Technik einen Ventilantrieb zum Bewegen des Ventilelements zwischen der Öffnungsstellung und der Schließstellung. Hinsichtlich der konstruktiven Gestaltung des Ventilantriebs bestehen im Rahmen der Erfindung verschiedene Möglichkeiten, die noch detailliert beschrieben werden. So kann es sich bei dem Ventilantrieb beispielsweise um einen Magnetaktor, einen Fluidantrieb (pneumatisch oder hydraulisch) oder auch um einen Piezoaktor handeln, um nur einige Beispiele zu nennen.

Der erfindungsgemäße Druckkopf umfasst eine flexible Membran, die den Ventilantrieb von der Beschichtungsmittelzuführung trennt, wobei die Membran mit ihrer Antriebsseite dem Ventilantrieb zugewandt ist und mit ihrer Beschichtungsmittelseite dem Beschichtungsmittel in der Beschichtungsmittelzuführung ausgesetzt ist, wobei eine Rückstellfeder vorgesehen ist, um die Membran in ihre Ruhestellung zu drücken.

Das zu applizierende Beschichtungsmittel berührt also in der Beschichtungsmittelzuführung nur die Beschichtungsmittelseite der flexiblen Membran, nicht dagegen den Ventilantrieb, der somit vor einer Einwirkung des Beschichtungsmittels geschützt ist. Bei dem erfindungsgemäßen Druckkopf wird also der Ventilantrieb von dem medienführenden Bereich getrennt, was vorteilhaft ist.

Durch diese Trennung werden nämlich Ablagerungen im Antriebsbereich (z.B. an Ventilnadeln, Kolben, im Innenrohr einer Spule, etc.) vermieden. Dadurch wird die Funktion des Drucckopfs aufrechterhalten und Reinigungs-, Spül- und Instandhaltungsintervalle können verlängert werden.

Ein weiterer Vorteil besteht in der wesentlich verbesserten Spülbarkeit des Druckkopfs, weil die flexible Membran auf ihrer Beschichtungsmittelseite kaum Ansatzpunkte für Beschichtungsmittelablagerungen bietet. Damit verbunden ist auch der Vorteil eines schnelleren Farbwechsels, da der Spülvorgang kürzer ist.

Darüber hinaus können mit dem erfindungsgemäßen Druckkopf auch Zwei- oder Mehrkomponentenlacke appliziert werden.

Ferner wird die Prozesssicherheit erhöht und die Leckagesicherheit verbessert.

Schließlich ist für das Bewegen des beweglichen Ventilelements auch eine geringere Antriebsleistung erforderlich.

In einem Ausführungsbeispiel der Erfindung weist der Drucckopf nicht nur eine einzige Auslassöffnung mit einem einzigen Ventilelement auf, sondern mehrere Auslassöffnungen mit jeweils einem beweglichen Ventilelement und jeweils einem Ventilantrieb.

In einer Variante dieses Ausführungsbeispiels ist hierbei jedem Ventilantrieb jeweils eine flexible Membran zugeordnet, um den Ventilantrieb abzutrennen.

In einer anderen Variante dieses Ausführungsbeispiels ist dagegen eine gemeinsame, durchgehende, flexible Membran vorgesehen, welche die Ventilantriebe gemeinsam gegenüber der Beschichtungsmittelzuführung abtrennt. Diese durchgehende Membran kann an einzelnen Stellen (z.B. zwischen jedem Ventilantrieb) an der oberen Kanalwand anliegen, befestigt sein oder durchgängig von der oberen Kanalwand beabstandet sein.

Weiterhin ist zu erwähnen, dass der Druckkopf eine Rückstellfeder (z.B. Spiralfeder) aufweist, um die flexible Membran in ihre Ruhestellung zu drücken, wobei die Ruhestellung vorzugsweise die Schließstellung ist, in der das bewegliche Ventilelement die Auslassöffnung verschließt.

Zusätzlich zu dieser Rückstellfeder kann die Membran elastisch federnd ausgebildet sein, wobei die Membran dann zusätzlich die Funktion einer Rückstellfeder erfüllt.

Das bewegliche Ventilelement (z.B. Ventilnadel) kann also sowohl durch die Rückstellfeder als auch durch die elastische Membran in die Ruhestellung gedrückt werden.

Weiterhin ist in diesem Zusammenhang zu erwähnen, dass die Ruhestellung vorzugsweise die Schließstellung ist, in der das bewegliche Ventilelement die Auslassöffnung verschließt. Es ist jedoch alternativ auch möglich, dass die Ruhestellung die Öffnungsstellung ist, in der das bewegliche Ventilelement die Auslassöffnung freigibt. Die flexible Membran kann also das bewegliche Ventilelement aufgrund ihrer Federkraft wahlweise in die Schließstellung oder in die Öffnungsstellung drücken, was von der konstruktiven Gestaltung des Druckkopfs abhängt.

Ferner besteht im Rahmen der Erfindung die Möglichkeit, dass die Membran selbst magnetisch oder magnetisierbar ist oder partiell magnetisch oder magnetisierbar ist oder im Aktionsbereich des Magnetantriebs zum Beispiel durch mit der Membran verbundene Elemente magnetisch oder magnetisierbar ist und von einem Magnetantrieb angetrieben wird, der die magnetische Membran in Abhängigkeit von seiner Polarität entweder anzieht oder abstößt. Die Magnetwirkung der Membran kann beispielsweise dadurch erreicht werden, dass die Membran Magnetpartikel enthält, um die Membran magnetisch zu machen.

Es wurde bereits vorstehend kurz erwähnt, dass der Druckkopf eine verschiebbare Ventilnadel aufweisen kann, um das bewegliche Ventilelement zwischen der Öffnungsstellung und der Schließstellung zu bewegen. Die Ventilnadel kann hierbei einen beweglichen Anker in einem Magnetaktor bilden.

In einem Ausführungsbeispiel der Erfindung ist diese Ventilnadel fest mit der Membran und dem Ventilelement verbunden, so dass die Verschiebung der Ventilnadel zwangsläufig zu einer entsprechenden Auslenkung der Membran und des Ventilelementes führt.

Ferner ist zu erwähnen, dass sich das Ventilelement und/oder die Ventilnadel vorzugsweise vollständig auf der Antriebsseite der Membran befinden und durch die Membran von der Beschichtungsmittelzuführung getrennt werden. Dies ist vorteilhaft, weil die Membran dann beschichtungsmittelseitig völlig glatt ausgebildet sein kann und deshalb keine Ansatzpunkte für Beschichtungsmittelablagerungen bildet.

Es besteht jedoch alternativ auch die Möglichkeit, dass das Ventilelement und/oder die Ventilnadel mit einem Teil beschichtungsmittelseitig und mit einem anderen Teil antriebsseitig bezüglich der Membran angeordnet sind, so dass die Membran die beiden Teile voneinander trennt. Diese Erfindungsvariante kann konstruktiv vorteilhaft sein, zum Beispiel, um einen größeren Strömungsquerschnitt für das Beschichtungsmittel zu erzielen.

Darüber hinaus kann das Ventilelement zum Verschließen bzw. Freigeben der Auslassöffnung eine Noppe auf der Beschichtungsmittelseite der Membran aufweisen, wobei diese Noppe dann die Auslassöffnung freigibt bzw. verschließt.

In einem Ausführungsbeispiel der Erfindung ist diese Noppe einstückig an die Membran auf der Auslassseite der Membran angeformt.

Weiterhin ist in diesem Zusammenhang zu erwähnen, dass die Noppe vorzugsweise konzentrisch und kongruent zu der Auslassöffnung geformt ist, um die Auslassöffnung dichtend verschließen zu können.

In einer Variante der Erfindung ist der Ventilantrieb ein Fluidantrieb, der eine flexible Antriebsmembran antriebsseitig mit einem einstellbaren Fluiddruck beaufschlagt, um die Antriebsmembran auszulenken, um damit das Ventilelement zwischen der Öffnungsstellung und der Schließstellung zu bewegen. Beispielsweise kann es sich bei dem Fluidantrieb um einen Hydraulikantrieb oder einen Pneumatikantrieb handeln, der die Antriebsmembran mit einer Hydraulikflüssigkeit bzw. mit Druckluft beaufschlagt.

Die vorstehend erwähnte Antriebsmembran kann im Rahmen der Erfindung zusätzlich zu der eingangs erwähnten flexiblen Membran vorgesehen sein oder diese Membran bilden. Der erfindungsgemäße Druckkopf kann also zwei Membranen für Abdichtung und Antrieb oder eine einzige Membran für Abdichtung und Antrieb aufweisen.

Zu der Membran ist zu erwähnen, dass die Membran vorzugsweise sehr dünn ist und deshalb vorzugsweise eine Dicke von weniger als 0,5mm, 0,1mm, 0,05mm oder sogar weniger als 0,01mm aufweist.

Zu dem Druckkopf ist allgemein zu bemerken, dass der Drucckopf vorzugsweise einen hohen Auftragswirkungsgrad von mindestens 80%, 90%, 95% oder sogar mindestens 99% aufweist, so dass nahezu das gesamte applizierte Beschichtungsmittel vollständig auf dem zu beschichtenden Bauteil abgelagert wird, ohne dass Overspray entsteht.

Für einen Einsatz bei der Serienlackierung von Kraftfahrzeugkarosseriebauteilen ist es weiterhin vorteilhaft, wenn der Druckkopf eine ausreichende Flächenbeschichtungsleistung aufweist, die vorzugsweise mindestens 0,5m²/min, 1m²/min, 2m²/min oder sogar mindestens 3m²/min beträgt.

Hinsichtlich des Materials für die Membran bestehen im Rahmen der Erfindung verschiedene Möglichkeiten. Beispielsweise kann eine Metallfolie verwendet werden oder eine Membran aus einem Polymermaterial, wie beispielsweise Polytetrafluorethylen (PTFE), Nitrilkautschuk (NBR), Fluorelastomere (z.B. Perfluorkautschuk (FFKM) oder Fluorkautschuk (FKM), Polyurethan (PU), Perfluoralkoxy-Polymer (PFA), Polyester (PE), Polyamid, Polyethylen (PE), Polypropylen (PP), Polyoxymethylen (POM). Ferner besteht auch die Möglichkeit, dass die Membran eine mikroporöse Membran ist.

In einer Variante der Erfindung gibt der Druckkopf einen Tröpfchenstrahl aus im Gegensatz zu einem in Strahllängsrichtung zusammenhängenden Beschichtungsmittelstrahl. In einer anderen Variante der Erfindung gibt der Druckkopf dagegen einen in Strahllängsrichtung zusammenhängenden Beschichtungsmittelstrahl ab im Gegensatz zu einem Tröpfchenstrahl.

Darüber hinaus ist zu bemerken, dass die Erfindung nicht nur Schutz beansprucht für den vorstehend beschriebenen erfindungsgemäßen Druckkopf als einzelnes Bauteil. Vielmehr beansprucht die Erfindung auch Schutz für eine komplette Beschichtungseinrichtung mit mindestens einem solchen Drucckopf, der vorzugsweise von einem mehrachsigen Beschichtungsroboter mit einer seriellen und/oder parallelen Roboterkinematik über die Oberfläche des zu beschichtenden Bauteils bewegt wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Darstellung eines Druckkopfs mit mehreren Düsen mit jeweils einem Ventilantrieb und einer durchgehenden gemeinsamen Membran,
- Figur 2: eine Abwandlung von Figur 1, wobei jedem Ventilantrieb eine separate Membran zugeordnet ist,
- Figur 3: eine schematische Darstellung eines nicht erfindungsgemäßen Druckkopfs, wobei die Membran auch die Funktion einer Rückstellfeder erfüllt,
- Figur 4: eine nicht erfindungsgemäße Abwandlung von Figur 3, wobei der Anker keine Ventilnadel bildet und die Membran Magnetpartikel enthält,
- Figur 5: eine Abwandlung, wobei der Ventilantrieb vollständig auf der Antriebsseite der Membran angeordnet ist,
- Figur 6: eine Abwandlung, bei der ein Teil des Ventilantriebs auch beschichtungsmittelseitig angeordnet ist,
- Figur 7: eine Abwandlung mit einer zusätzlichen Noppe zum Abdichten der Auslassöffnung,
- Figur 8: eine nicht erfindungsgemäße Abwandlung mit einem hydraulischen Antrieb.
- Figur 9: eine weitere Abwandlung.

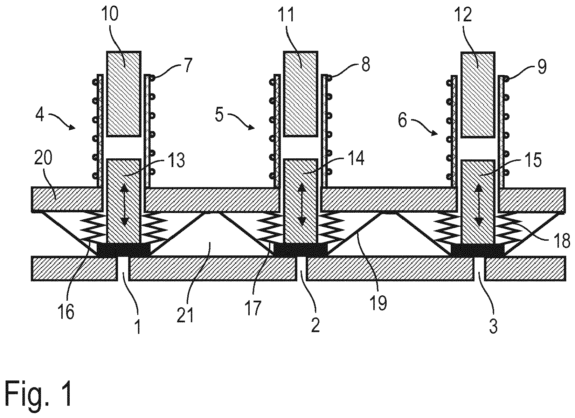

Figur 1 zeigt eine schematische Darstellung eines erfindungsgemäßen Druckkopfs, der beispielsweise zur Lackapplikation bei der Serienlackierung von Kraftfahrzeugkarosseriebauteilen in einer Lackieranlage eingesetzt werden kann, wobei der Druckkopf von einem mehrachsigen Lackierroboter mit einer seriellen Roboterkinematik geführt wird.

Der Druckkopf weist in einer Düsenplatte mehrere Düsen 1, 2, 3 auf, um den Lack auf die Bauteiloberfläche des zu lackierenden Bauteils zu applizieren, wobei aus den Düsen 1-3 jeweils ein räumlich eng begrenzter Lackstrahl (zusammenhängend oder in Form von Tropfen) ausgegeben wird. Zur Vereinfachung sind in der Zeichnung nur die drei Düsen 1-3 dargestellt. Tatsächlich weist der Druckkopf jedoch in der Praxis eine größere Anzahl von Düsen auf.

Jeder der Düsen 1-3 ist jeweils ein Steuerventil 4, 5 bzw. 6 zugeordnet, um die Düsen 1-3 entweder zu öffnen oder zu verschließen.

Die einzelnen Steuerventile 4-6 weisen jeweils eine Spule 7, 8 bzw. 9 auf, in der ein Spulenkern 10, 11 bzw. 12 ist.

Darüber hinaus weisen die Steuerventile 4-6 jeweils einen verschiebbaren Anker 13, 14 bzw. 15 auf, der eine Ventilnadel bildet, wobei die Anker 13-15 in Abhängigkeit von der Bestromung der zugehörigen Spule 7-9 verschoben werden.

Die Anker 13-15 werden durch jeweils eine Rückstellfeder 16, 17, 18 in der Zeichnung nach unten in die Schließstellung gedrückt, in der die Düsen 1-3 verschlossen sind.

Schließlich weist der Druckkopf noch eine flexible, durchgehende Membran 19 auf, die zwischen den Steuerventilen 4-6 jeweils an einer oberen Kanalwand 20 einer Beschichtungsmittelzuführung 21 befestigt ist. Diese durchgehende Membran 19 kann an einzelnen Stellen (z.B. zwischen jedem Ventilantrieb) an der oberen Kanalwand 20 anliegen, befestigt sein oder durchgängig von der oberen Kanalwand 20 beabstandet sein. Zwischen diesen Befestigungspunkten kann die Membran 19 dagegen nach unten ausgelenkt werden. Die Membran 19 trennt hierbei die Beschichtungsmittelzuführung 21 von dem Steuerventil 4-6. Dies ist vorteilhaft, weil dadurch Beschichtungsmittelablagerungen an den Steuerventilen 4-6 vermieden werden.

Zur Lackapplikation werden die Steuerventile 4-6 so mit Strom angesteuert, dass der Anker 13-15 entgegen der Kraft der Rückstellfeder 16-18 nach oben gezogen wird, wodurch die Anker 13-15 die Düsen 1-3 freigeben. In dieser angehobenen Öffnungsstellung kann dann Lack aus der Beschichtungsmittelzuführung 21 durch die Düsen 1-3 austreten.

Ohne eine Bestromung der Spulen 7-9 drückt die Rückstellfeder 16-18 die Anker 13-15 dagegen in der Zeichnung nach unten, so dass die Anker 13-15 die Düsen 1-3 versperren und dadurch die Lackabgabe abschalten.

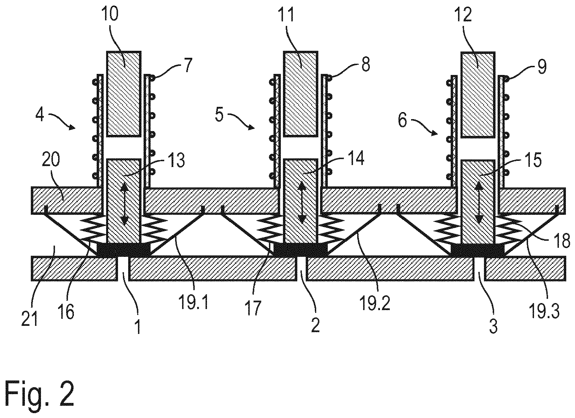

Figur 2 zeigt eine Abwandlung von Figur 1, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass anstelle der durchgehenden Membran 19 drei getrennte Membranen 19.1, 19.2, 19.3 für die einzelnen Steuerventile 4-6 vorgesehen sind.

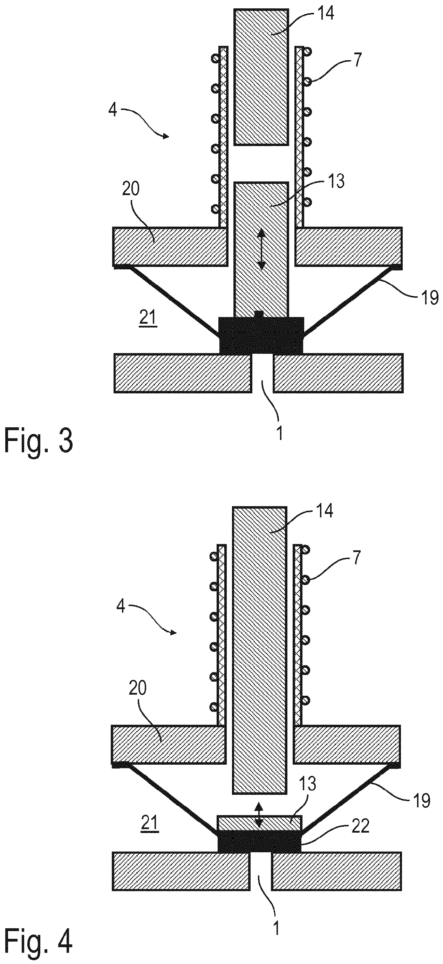

Figur 3 zeigt eine schematische Darstellung einer nicht erfindungsgemäßen Abwandlung, die ebenfalls weitgehend mit dem vorstehend beschriebenen Ausführungsbeispiel übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieser nicht erfindungsgemäßen Variante besteht darin, dass die Rückstellfeder 16 weggelassen ist und stattdessen die Membran 19 die Funktion der Rückstellefeder 16 erfüllt.

Figur 4 zeigt eine weitere nicht erfindungsgemäße Abwandlung, die ebenfalls weitgehend mit der vorstehend beschriebenen nicht erfindungsgemäßen Variante übereinstimmt, so dass zur Vermeidung von Wiederholungen auf die vorstehende Beschreibung verwiesen wird.

Eine Besonderheit dieser nicht erfindungsgemäßen Variante besteht darin, dass der Anker 13 hierbei keine Ventilnadel bildet.

Darüber hinaus enthält die Membran 19 hierbei Magnetpartikel 22, um die magnetische Ansteuerung zu unterstützen.

Ferner hinaus erfüllt die Membran 19 auch in dieser nicht erfindungsgemäßen Variante die Funktion der Rückstellfeder 16, die somit weggelassen ist.

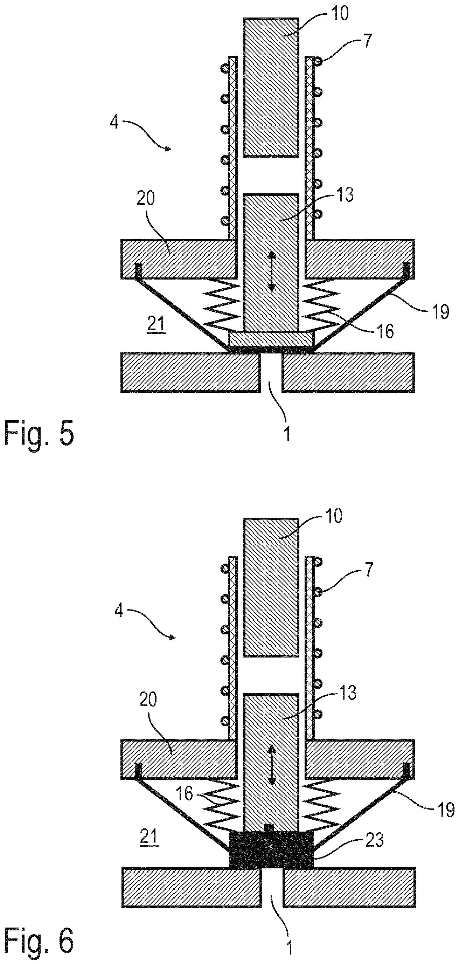

Figur 5 zeigt eine weitere Abwandlung, die wiederum teilweise mit den vorstehend beschriebenen Ausführungsbeispielen übereinstimmt, so dass zur Vermeidung von Wiederholungen auf die vorstehende Beschreibung Bezug genommen wird, wobei für entsprechende Einzelheiten dieselben Bezugszeichen verwendet werden.

Eine Besonderheit dieses Ausführungsbeispiels besteht darin, dass das Steuerventil 4 hierbei vollständig auf der Antriebsseite der Membran 19 angeordnet ist. Dies bedeutet, dass die Membran 19 auf der Beschichtungsmittelseite vollständig glatt ist und deshalb keinerlei Ansatzpunkte für Beschichtungsmittelablagerungen bietet. Dies erleichtert die Entfernung von Lackresten bei einem Spülvorgang.

Figur 6 zeigt eine Abwandlung von Figur 5, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass ein Teil 23 des Ankers 13 auf der Beschichtungsmittelseite der Membran 19 angeordnet ist, was konstruktive Vorteile haben kann.

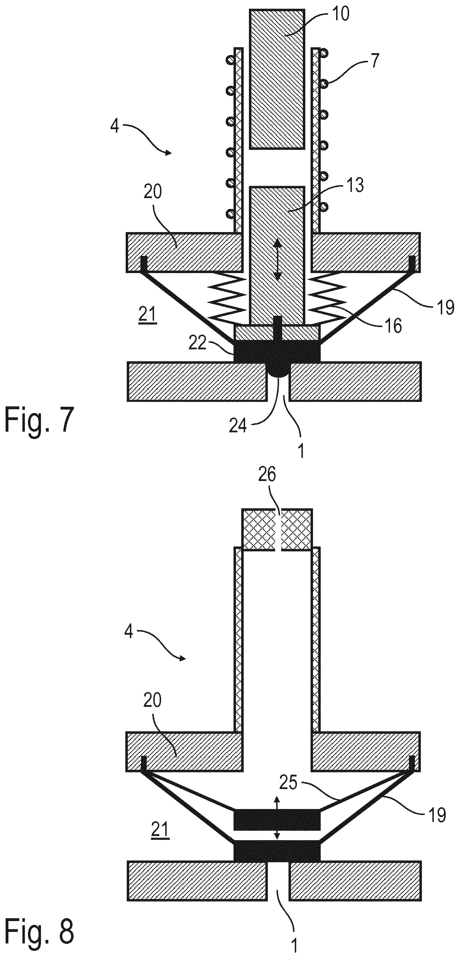

Ferner zeigt Figur 7 eine weitere Abwandlung, so dass zur Vermeidung von Wiederholungen wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass auf der Beschichtungsmittelseite der Membran 19 eine Noppe 24 angeordnet ist, die in der Schließstellung die Düse 1 verschließt. Die Noppe 24 ist deshalb konzentrisch und kongruent zu der Düse 1 angeordnet.

Weiterhin zeigt Figur 8 eine weitere nicht erfindungsgemäße Variante, die wieder weitgehend mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieser nicht erfindungsgemäßen Variante besteht in einem hydraulischen Ventilantrieb.

Hierzu ist eine weitere Membran 25 vorgesehen, die über eine Hydraulikzuleitung 26 mit Hydraulikflüssigkeit beaufschlagt werden kann, um die Membran 25 und damit auch die Membran 19 nach unten auszulenken und dadurch die Düse 1 zu verschließen.

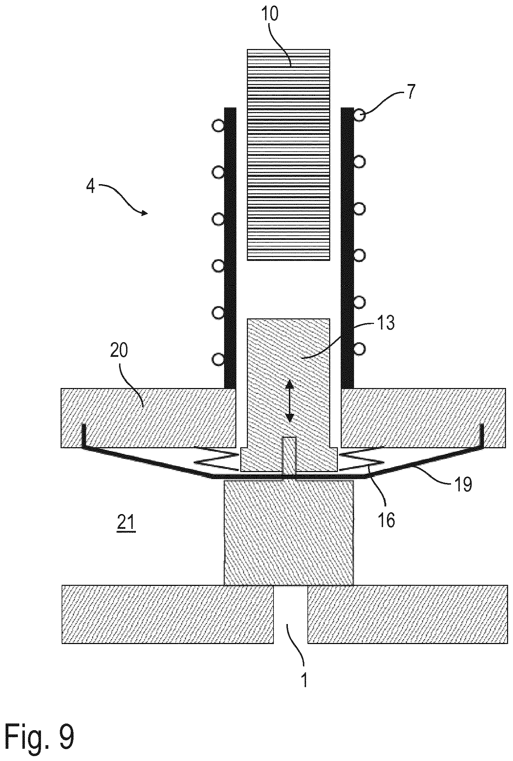

Schließlich zeigt Figur 9 ein weiteres Ausführungsbeispiel, das wieder weitgehend mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten dieselben Bezugszeichen verwendet werden.

Dieses Ausführungsbeispiel weist auf der Medienseite einen verlängerten Stößel (Anker 13) auf. Dabei wird die Membran 19 nur geringfügig ausgelenkt. Vorteil ist ein größerer Strömungsquerschnitt.

### Bezugszeichenliste

- 1-3: Düsen
- 4-6: Steuerventil
- 7-9: Spule
- 10-12: Spulenkern
- 13-15: Anker (Ventilnadel)
- 16-18: Rückstellfeder
- 19: Gemeinsame Membran
- 19.1-19.3: Membranen der einzelnen Steuerventile
- 20: Obere Kanalwand der Beschichtungsmittelzuführung
- 21: Beschichtungsmittelzuführung
- 22: Magnetpartikel
- 23: Teil auf der Beschichtungsmittelseite der Membran
- 24: Noppe zum Abdichten der Düse
- 25: Membran des Hydraulikantriebs
- 26: Hydraulikzuleitung

## Patentansprüche

1. Druckkopf zur Applikation eines Beschichtungsmittels auf ein Bauteil, insbesondere zur Applikation eines Lacks auf ein Kraftfahrzeugkarosseriebauteil, mit
a) mindestens einer Auslassöffnung (1-3) zur Abgabe des Beschichtungsmittels,
b) einer Beschichtungsmittelzuführung (21) zur Zuführung des Beschichtungsmittels zu der Auslassöffnung (1-3),
c) einem beweglichen Ventilelement (13-15), das zwischen einer Öffnungsstellung und einer Schließstellung beweglich ist, wobei das Ventilelement (13-15) in der Schließstellung die Auslassöffnung (1-3) verschließt, wohingegen das Ventilelement (13-15) in der Öffnungsstellung die Auslassöffnung (1-3) freigibt, und
d) einem Ventilantrieb (7-15) zum Bewegen des Ventilelements (13-15) zwischen der Öffnungsstellung und der Schließstellung,
e) einer flexible Membran (19, 19.1-19.4), die den Ventilantrieb (7-15) von der Beschichtungsmittelzuführung (21) trennt, wobei die Membran (19, 19.1-19.4) mit ihrer Antriebsseite dem Ventilantrieb (7-15) zugewandt ist und mit ihrer Beschichtungsmittelseite dem Beschichtungsmittel in der Beschichtungsmittelzuführung (21) ausgesetzt ist,
**dadurch gekennzeichnet,**
f) **dass** eine Rückstellfeder (16-18) vorgesehen ist, um die Membran (19, 19.1-19.4) in ihre Ruhestellung zu drücken.

2. Druckkopf nach Anspruch 1, **dadurch gekennzeichnet,**
a) **dass** der Druckkopf mehrere Auslassöffnungen (1-3) mit jeweils einem beweglichen Ventilelement (13-15) aufweist, und
b) **dass** jedem beweglichen Ventilelement (13-15) jeweils eine eigene flexible Membran (19.1-19.4) zugeordnet ist, die den Ventilantrieb (7-15) des jeweiligen Ventilelements (13-15) von der Beschichtungsmittelzuführung (21) trennt.

3. Druckkopf nach Anspruch 1, **dadurch gekennzeichnet,**
a) **dass** der Druckkopf mehrere Auslassöffnungen (1-3) mit jeweils einem beweglichen Ventilelement (13-15) aufweist, und
b) **dass** den Ventilelementen eine gemeinsame, durchgehende, flexible Membran (19) zugeordnet ist, welche die Beschichtungsmittelzuführung (21) von den jeweiligen Ventilantrieben (7-15) trennt.

4. Druckkopf nach einem der vorhergehenden Ansprüche, **dadurch gekennzeichnet, dass** die Membran (19, 19.1-19.4) elastisch ist und eine Rückstellfeder bildet, welche das bewegliche Ventilelement (13-15) in ihre Ruhestellung drückt, wobei die Ruhestellung vorzugsweise die Schließstellung ist.

5. Druckkopf nach einem der vorhergehenden Ansprüche, **dadurch gekennzeichnet,**
a) **dass** die Membran (19, 19.1-19.4) magnetisch oder magnetisierbar ist und der Ventilantrieb (7-15) einen Magnetantrieb aufweist, der die magnetische oder magnetisierbare Membran (19, 19.1-19.4) entweder anzieht oder abstößt,
b) **dass** die Membran (19, 19.1-19.4) vorzugsweise Magnetische oder magnetisierbare Partikel (22) enthält, um die Membran (19, 19.1-19.4) magnetisch zu machen oder durch einen Magneten auszulenken.

6. Druckkopf nach einem der vorhergehenden Ansprüche, **gekennzeichnet durch** eine verschiebbare Ventilnadel (13-15) zum Bewegen des Ventilelements (13-15) zwischen der Öffnungsstellung und der Schließstellung, wobei die Ventilnadel (13-15) vorzugsweise einen verschiebbaren Anker eines Magnetaktors bildet.

7. Druckkopf nach Anspruch 6, **dadurch gekennzeichnet, dass** die Ventilnadel (13-15) fest mit der Membran (19, 19.1-19.4) und dem Ventilelement (13-15) verbunden ist, so dass eine Verschiebung der Ventilnadel (13-15) zwangsläufig zu einer entsprechenden Auslenkung der Membran (19, 19.1-19.4) und des Ventilelements (13-15) führt.

8. Druckkopf nach einem der Ansprüche 6 oder 7,
**dadurch gekennzeichnet,**
a) **dass** sich das Ventilelement (13-15) und/oder die Ventilnadel (13-15) vollständig auf der Antriebsseite der Membran (19, 19.1-19.4) befinden und durch die Membran (19, 19.1-19.4) von der Beschichtungsmittelzuführung (21) getrennt werden, oder
b) **dass** sich das Ventilelement (13-15) und/oder die Ventilnadel mit einem Teil (23) in der Beschichtungsmittelzuführung (21) und mit einem anderen Teil auf der Antriebsseite der Membran (19, 19.1-19.4) befinden, wobei die Membran (19, 19.1-19.4) die beiden Teile voneinander trennt.

9. Druckkopf nach einem der vorhergehenden Ansprüche, **dadurch gekennzeichnet,**
a) **dass** das Ventilelement (13-15) eine Noppe (24) auf der Beschichtungsmittelseite der Membran (19, 19.1-19.4) aufweist, und/oder
b) **dass** das Ventilelement (13-15) einstückig an die Membran (19, 19.1-19.4) angeformt ist auf der Auslassseite der Membran (19, 19.1-19.4), insbesondere als Noppe auf der auslassseitigen Oberfläche der Membran (19, 19.1-19.4) .

10. Druckkopf nach Anspruch 9, **dadurch gekennzeichnet,**
a) **dass** die Noppe (24) auf der Auslassseite der Membran (19, 19.1-19.4) konzentrisch zu der Auslassöffnung (1-3) geformt ist, und/oder
b) **dass** die Noppe (24) auf der Auslassseite der Membran (19, 19.1-19.4) kongruent zur Form der Auslassöffnung (1-3) geformt ist.

11. Druckkopf nach Anspruch 1,
**dadurch gekennzeichnet,**
a) **dass** der Ventilantrieb (25, 26) ein Fluidantrieb ist, der eine flexible Antriebsmembran (25) antriebsseitig mit einem einstellbaren Fluiddruck beaufschlagt, um die Antriebsmembran (25) auszulenken und damit das Ventilelement (13-15) zwischen der Öffnungsstellung und der Schließstellung zu bewegen, und
b) **dass** der Fluidantrieb (25, 26) ein Hydraulikantrieb (25, 26) oder ein Pneumatikantrieb ist.

12. Druckkopf nach Anspruch 11, **dadurch gekennzeichnet,**
a) **dass** die Antriebsmembran (25) zusätzlich zu der Membran (19, 19.1-19.4) vorgesehen ist oder
b) **dass** die Antriebsmembran die Membran (19, 19.1-19.4) bildet.

13. Druckkopf nach Anspruch 1, **dadurch gekennzeichnet,**
a) **dass** die Auslassöffnung (1-3) eine Austrittsdüse des Druckkopfs ist, und/oder
b) **dass** die Membran (19, 19.1-19.4) eine Dicke von weniger als 0,5mm, 0,1mm, 0,05mm oder weniger als 0,01mm aufweist, und/oder
c) **dass** der Druckkopf einen Auftragswirkungsgrad von mindestens 80%, 90%, 95% oder 99% aufweist, so dass im das gesamte applizierte Beschichtungsmittel vollständig auf dem Bauteil abgelagert wird, ohne dass Overspray entsteht, und/oder
d) **dass** der Ventilantrieb (7-15) einen Magnetaktor (7-15) oder einen Piezoaktor aufweist.

14. Druckkopf nach einem der vorhergehenden Ansprüche, **dadurch gekennzeichnet,**
a) **dass** die Membran (19, 19.1-19.4) eine Metallfolie ist, oder
b) **dass** die Membran (19, 19.1-19.4) aus einem Polymermaterial besteht, insbesondere aus
b1) Polytetrafluorethylen,
b2) Nitrilkautschuk,
b3) Fluorelastomer, insbesondere Perfluorkautschuk oder Fluorkautschuk,
b4) Polyurethan,
b5) Perfluoralkoxy-Polymer,
b6) Polyester
b7) Polyamid,
b8) Polyethylen,
b9) Polypropylen,
b10) Polyoxymethylen, und/oder
c) **dass** die Membran (19, 19.1-19.4) eine mikroporöse Membran (19, 19.1-19.4) ist.

15. Beschichtungseinrichtung zur Beschichtung von Bauteilen mit einem Beschichtungsmittel, insbesondere zur Lackierung von Kraftfahrzeugkarosseriebauteilen mit einem Lack, mit einem Applikationsgerät zur Applikation des Beschichtungsmittels auf das Bauteil, **dadurch gekennzeichnet, dass** das Applikationsgerät ein Druckkopf nach einem der vorhergehenden Ansprüche ist.

## Claims

1. Printhead for applying a coating agent to a component, in particular for applying a paint to a motor vehicle body component, having
a) at least one outlet opening (1-3) for dispensing the coating agent,
b) a coating agent supply (21) for supplying the coating agent to the outlet opening (1-3),
c) a movable valve element (13-15) which is movable between an open position and a closed position, the valve element (13-15) closing the outlet opening (1-3) in the closed position, whereas the valve element (13-15) releases the outlet opening (1-3) in the open position, and
d) a valve actuator (7-15) for moving the valve element (13-15) between the open position and the closed position,
e) a flexible membrane (19, 19.1-19.4) which separates the valve actuator (7-15) from the coating agent supply (21), wherein the membrane (19, 19.1-19.4) faces the valve actuator (7-15) with its actuator side and is exposed with its coating agent side to the coating agent in the coating agent supply (21),
**characterized in that**
f) a return spring (16-18) is provided in order to press the membrane (19, 19.1-19.4) into its rest position.

2. Printhead according to claim 1, **characterized in that**
a) the printhead has a plurality of outlet openings (1-3) each having a movable valve element (13-15), and
b) each movable valve element (13-15) is assigned in each case its own flexible membrane (19.1-19.4) which separates the valve actuator (7-15) of the respective valve element (13-15) from the coating agent supply (21).

3. Printhead according to claim 1, **characterized in that**
a) the printhead has a plurality of outlet openings (1-3) each having a movable valve element (13-15), and
b) the valve elements are assigned a common, continuous, flexible membrane (19) which separates the coating agent supply (21) from the respective valve actuators (7-15).

4. Printhead according to one of the preceding claims, **characterized in that** the membrane (19, 19.1-19.4) is elastic and forms a return spring which presses the movable valve element (13-15) into its rest position, the rest position preferably being the closed position.

5. Printhead according to one of the previous claims, **characterized in that**
a) the membrane (19, 19.1-19.4) is magnetic or magnetizable and the valve actuator (7-15) has a magnetic actuator which either attracts or repels the magnetic or magnetizable membrane (19, 19.1-19.4),
b) the membrane (19, 19.1-19.4) preferably contains magnetic or magnetizable particles (22) to make the membrane (19, 19.1-19.4) magnetic or to deflect it by a magnet.

6. Printhead according to one of the preceding claims, **characterized by** a displaceable valve needle (13-15) for moving the valve element (13-15) between the opening position and the closed position, said valve needle (13-15) preferably forming a displaceable armature of a magnetic actuator.

7. Printhead according to claim 6, **characterized in that** the valve needle (13-15) is fixedly connected to the membrane (19, 19.1-19.4) and the valve element (13-15) so that a displacement of the valve needle (13-15) inevitably leads to a corresponding deflection of the membrane (19, 19.1-19.4) and the valve element (13-15).

8. Printhead according to one ofclaims 6 or 7, **characterized in that**
a) the valve element (13-15) and/or the valve needle (13-15) are located completely on the actuator side of the membrane (19, 19.1-19.4) and are separated from the coating agent supply (21) by the membrane (19, 19.1-19.4), or
b) the valve element (13-15) and/or the valve needle are located with one part (23) in the coating agent supply (21) and with another part on the actuator side of the membrane (19, 19.1-19.4), wherein the membrane (19, 19.1-19.4) separates the two parts from one another.

9. Printhead according to one of the preceding claims, **characterized in that**
a) the valve element (13-15) has a nipple (24) on the coating agent side of the membrane (19, 19.1-19.4), and/or
b) the valve element (13-15) is integrally formed on the membrane (19, 19.1-19.4) on the outlet side of the membrane (19, 19.1-19.4), in particular as a nipple on the outlet side surface of the membrane (19, 19.1-19.4).

10. Printhead according to claim 9, **characterized in that**
a) the nipple (24) on the outlet side of the membrane (19, 19.1-19.4) is formed concentrically to the outlet opening (1-3), and/or
b) the nipple (24) on the outlet side of the membrane (19, 19.1-19.4) is congruently shaped to the shape of the outlet opening (1-3).

11. Printhead according to claim 1,
**characterized in that**
a) the valve actuator (25, 26) is a fluid actuator which applies an adjustable fluid pressure to a flexible actuator membrane (25) on the actuator side in order to deflect the actuator membrane (25) and thus move the valve element (13-15) between the open position and the closed position, and
b) the fluid actuator (25, 26) is a hydraulic actuator (25, 26) or a pneumatic actuator.

12. Printhead according to claim 11, **characterized in that**
a) the actuator membrane (25) is provided in addition to the membrane (19, 19.1-19.4) or
b) the actuator membrane forms the membrane (19, 19.1-19.4).

13. Printhead according to claim 1, **characterized in that**
a) the outlet opening (1-3) is an outlet nozzle of the printhead, and/or
b) the membrane (19, 19.1-19.4) has a thickness of less than 0.5mm, 0.1mm, 0.05mm or less than 0.01mm, and/or
c) the printhead has an application efficiency of at least 80%, 90%, 95% or 99% so that substantially all of the applied coating agent is completely deposited on the component without overspray; and/or
d) the valve actuator (7-15) has a magnetic actuator (7-15) or a piezo actuator.

14. Printhead according to one of the preceding claims, **characterized in that**
a) the membrane (19, 19.1-19.4) is a metal foil, or
b) the membrane (19, 19.1-19.4) consists of a polymer material, in particular of
b1) polytetrafluoroethylene,
b2) nitrile rubber,
b3) fluoroelastomers, in particular perfluoroelastomers or fluororubbers,
b4) polyurethane,
b5) Perfluoroalkoxy polymer,
b6) Polyester
b7) polyamide,
b8) polyethylene,
b9) Polypropylene,
b10) polyoxymethylene, and/or
c) the membrane (19, 19.1-19.4) is a microporous membrane (19, 19.1-19.4).

15. Coating device for coating components with a coating agent, in particular for painting motor vehicle body components with a paint, with an application device for applying the coating agent to the component, **characterized in that** the application device is a printhead according to one of the preceding claims.

## Revendications

1. Tête d'impression pour l'application d'un produit de revêtement sur un composant, plus particulièrement pour l'application d'une peinture sur un composant de carrosserie de véhicule automobile, avec
a) au moins une ouverture de sortie (1-3) pour la distribution du produit de revêtement,
b) une alimentation en produit de revêtement (21) pour conduire le produit de revêtement vers l'ouverture de sortie (1-3),
c) un élément de soupape mobile (13-15) qui est mobile entre une position d'ouverture et une position de fermeture, dans lequel l'élément de soupape (13-15), dans la position de fermeture, ferme l'ouverture de sortie (1-3), tandis que l'élément de soupape (13-15), dans la position d'ouverture, libère l'ouverture de sortie (1-3) et
d) un entraînement de soupape (7-15) pour le déplacement de l'élément de soupape (13-15) entre la position d'ouverture et la position de fermeture,
e) une membrane flexible (19, 19.1-19.4) qui sépare l'élément de soupape (7-15) de l'alimentation en produit de revêtement (21), dans laquelle la membrane (19, 19.1-19.4) est orientée, avec son côté d'entraînement, vers l'entraînement de soupape (7-15) et est exposée, avec son côté produit de revêtement, au produit de revêtement dans l'alimentation en produit de revêtement (21),
**caractérisée en ce que**
f) un ressort de rappel (16-18) est prévu, afin de comprimer la membrane (19, 19.1-19.4) vers sa position de repos.

2. Tête d'impression selon la revendication 1, **caractérisée en ce que**
a) la tête d'impression comprend plusieurs ouvertures de sortie (1-3) avec chacune un élément de soupape mobile (13-15),
b) à chaque élément de soupape mobile (13-15) correspond sa propre membrane flexible (19.1-19.4) qui sépare l'entraînement de soupape (7-15) de l'élément de soupape (13-15) de l'alimentation en produit de revêtement (21).

3. Tête d'impression selon la revendication 1, **caractérisée en ce que**
a) la tête d'impression comprend plusieurs ouvertures de sortie (1-3) avec chacune un élément de soupape mobile (13-15),
b) à l'élément de soupape correspond une membrane flexible (19) commune traversante qui sépare l'alimentation en produit de revêtement (21) des éléments de soupapes (7-15) correspondants.

4. Tête d'impression selon l'une des revendications précédentes, **caractérisée en ce que** la membrane (19, 19.1-19.4) est élastique et forme un ressort de rappel qui comprime l'élément de soupape mobile (13-15) vers sa position de repos, dans laquelle la position de repos est de préférence la position de fermeture.

5. Tête d'impression selon l'une des revendications précédentes, **caractérisée en ce que**
a) la membrane (19, 19.1-19.4) est magnétique ou magnétisable et l'entraînement de soupape (7-15) comprend un entraînement magnétique qui attire ou repousse la membrane magnétique ou magnétisable (19, 19.1-19.4),
b) la membrane (19, 19.1-19.4) contient de préférence des particules magnétiques ou magnétisables (22) afin de rendre la membrane (19, 19.1-1.4) magnétique ou de la dévier à l'aide d'un aimant.

6. Tête d'impression selon l'une des revendications précédentes, **caractérisée par** un pointeau de soupape coulissant (13-15) pour le déplacement de l'élément de soupape (13-15) entre la position d'ouverture et la position de fermeture, dans laquelle le pointeau de soupape (13-15) constitue de préférence une armature coulissante d'un actionneur magnétique.

7. Tête d'impression selon la revendication 6, **caractérisée en ce que** le pointeau de soupape (13-15) est fermement relié avec la membrane (19, 19.1-19.4) et l'élément de soupape (13-15), de façon à ce qu'un coulissement du pointeau de soupape (13-15) provoque obligatoirement une déviation correspondante de la membrane (19, 19.1-19.4) et de l'élément de soupape (13-15).

8. Tête d'impression selon l'une des revendications 6 ou 7, **caractérisée en ce que**
a) l'élément de soupape (13-15) et/ou le pointeau de soupape (13-15) se trouvent entièrement sur le côté d'entraînement de la membrane (19, 19.1-19.4) et sont séparés de l'alimentation en produit de revêtement (21) par la membrane (19, 19.1-19.4) ou
b) l'élément de soupape (13-15) et/ou le pointeau de soupape (13-15) se trouvent, avec une partie (23), dans l'alimentation en produit de revêtement (21) et, avec une autre partie, sur le côté d'entraînement de la membrane (19, 19.1-19.4), dans lequel la membrane (19, 19.1-19.4) sépare les deux parties l'une de l'autre.

9. Tête d'impression selon l'une des revendications précédentes, **caractérisée en ce que**
a) l'élément de soupape (13-15) comprend un téton (24) sur le côté de produit de revêtement de la membrane (19, 19.1-19.4) et/ou
b) l'élément de soupape (13-15) est formé d'une seule pièce sur la membrane (19, 19.1-19.4), sur le côté de la sortie de la membrane (19, 19.1-19.4), plus particulièrement sous la forme d'un téton sur la surface côté sortie de la membrane (19, 19.1-19.4).

10. Tête d'impression selon la revendication 9, **caractérisée en ce que**
a) le téton (24) est formé sur le côté de sortie de la membrane (19, 19.1-19.4) de manière concentrique par rapport à l'ouverture de sortie (1-3) et/ou
b) le téton (24) est formé sur le côté de sortie de la membrane (19, 19.1-19.4) de manière de manière congruente par rapport à la forme de l'ouverture de sortie (1-3).

11. Tête d'impression selon la revendication 1,
**caractérisée en ce que**
a) l'entraînement de soupape (25, 26) est un entraînement à fluide qui sollicite une membrane d'entraînement flexible (25) côté entraînement avec une pression de fluide réglable afin de dévier la membrane d'entraînement (25) et de déplacer ainsi l'élément de soupape (13-15) entre la position d'ouverture et la position de fermeture et
b) l'entraînement à fluide (25, 26) est un entraînement hydraulique (25, 26) ou un entraînement pneumatique.

12. Tête d'impression selon la revendication 11, **caractérisée en ce que**
a) la membrane d'entraînement (25) est prévue en plus de la membrane (19, 19.1-19.4) ou
b) la membrane d'entraînement constitue la membrane (19, 19.1-19.4).

13. Tête d'impression selon la revendication 1, **caractérisée en ce que**
a) l'ouverture de sortie (1-3) est une buse de sortie de la tête d'impression et/ou
b) la membrane (19, 19.1-19.4) présente une épaisseur inférieure à 0,5 mm, 0,1 mm, 0,05 mm ou inférieure à 0,01 mm et/ou
c) la tête d'impression présente un taux de rendement d'au moins 80 %, 90 %, 95 % ou 99 %, de façon à ce que l'ensemble du produit de revêtement appliqué soit entièrement déposé sur le composant, sans qu'il en résulte une pulvérisation en excès et/ou
d) l'entraînement de soupape (7-15) comprend un actionneur magnétique (7-15) ou un actionneur piézoélectrique.

14. Tête d'impression selon l'une des revendications précédentes, **caractérisée en ce que**
a) la membrane (19, 19.1-19.4) est un film métallique ou
b) la membrane (19, 19.1-19.4) est constituée d'un matériau polymère, plus particulièrement en
b1) polytétrafluoroéthylène,
b2) caoutchouc nitrile,
b3) fluoroélastomère, plus particulièrement caoutchouc perfluoré ou caoutchouc fluoré,
b4) polyuréthane,
b5) perfluoro-polymère,
b6) polyester,
b7) polyamide,
b8) polyéthylène,
b9) polypropylène,
b10) polyoxyméthylène et/ou
c) la membrane (19, 19.1-19.4) est une membrane microporeuse (19, 19.1-19.4)

15. Dispositif de revêtement pour le revêtement de composants avec un produit de revêtement, plus particulièrement pour la peinture de composants de carrosserie de véhicule automobile avec une peinture, avec un appareil d'application pour l'application du produit de revêtement sur le composant, **caractérisé en ce que** l'appareil d'application est une tête d'impression selon l'une des revendications précédentes.
